Europäisches Patentamt

European Patent Office

Office européen des brevets

(19)

(11) Veröffentlichungsnummer: **0 064 220**
**A2**

(12) # EUROPÄISCHE PATENTANMELDUNG

(21) Anmeldenummer: **82103365.1**

(22) Anmeldetag: **21.04.82**

(51) Int. Cl.³: **G 11 B 5/84**

(30) Priorität: **05.05.81 DE 3117670**

(43) Veröffentlichungstag der Anmeldung:
**10.11.82 Patentblatt 82/45**

(84) Benannte Vertragsstaaten:
**DE FR GB**

(71) Anmelder: **BASF Aktiengesellschaft
Carl-Bosch-Strasse 38
D-6700 Ludwigshafen(DE)**

(72) Erfinder: **Uhl, Karl, Dr.
Pierstrasse 8B
D-6710 Frankenthal(DE)**

(72) Erfinder: **Falk, Roland, Dr.
Hohbuehl 51
D-7590 Achern(DE)**

(72) Erfinder: **Sand, Rudolf
Anton-Bruckner-Weg 4
D-7601 Willstaett(DE)**

(72) Erfinder: **Nagel, Peter
Uhlandstrasse 5
D-7601 Willstaett(DE)**

(54) **Verfahren zur Herstellung von magnetischen Aufzeichnungsschichten.**

(57) Verfahren zur Herstellung der magnetischen Aufzeichnungsschicht für scheibenförmige Aufzeichnungsträger, bei dem auf eine Trägerbahnfolie ein- oder beidseitig eine oder mehrere Beschichtungsmassen aufgetragen werden. Unmittelbar danach wird anstelle der sonst üblichen magnetischen Ausrichtung der Schicht eine Entrichtung zur Herstellung einer magnetischen Isotropie vorgenommen. Durch anschließendes Trocknen wird die Beschichtung in eine feste Magnetschicht überführt.

EP 0 064 220 A2

Verfahren zur Herstellung von magnetischen Aufzeichnungsschichten

Die Erfindung betrifft ein Verfahren zur Herstellung der magnetischen Aufzeichnungsschicht für scheibenförmige Aufzeichnungsträger gemäß Oberbegriff des Patentanspruchs 1.

Magnetische Aufzeichnungsträger bestehen im allgemeinen aus einem unmagnetischen Trägermaterial, gewöhnlich Kunststoffolien, zur Verleihung der erforderlichen mechanischen Eigenschaften und einer oder mehreren haftfest darauf aufgebrachten Magnetschichten, in denen die Daten magnetisch gespeichert werden.

Bei der Herstellung von bandförmigen Aufzeichnungsträgern wird die mit der noch feuchten Beschichtungsmasse versehene Trägerbahn unmittelbar nach dem Beschichtungsvorgang durch ein Magnetfeld bewegt. Längs dieser Richtung, die in vielen Fällen mit der späteren Benutzungsrichtung identisch ist, erfolgt eine Ausrichtung der magnetisierbaren Teilchen, so daß dadurch die magnetischen Eigenschaften verbessert werden.

Im Gegensatz zu bandförmigen Aufzeichnungsträgern wird bei der Herstellung der beschichteten Trägerbahn, aus der später flexible, scheibenförmige Aufzeichnungsträger ausgestanzt werden, nach dem Beschichtungsvorgang keine Ausrichtung der magnetisierbaren Teilchen in Längsrichtung der Trägerbahn durchgeführt, da wegen der Aufzeichnung in Kreisbahnen jegliche magnetische Vorzugsrichtung zu vermeiden ist.

Eine Anisotropie der Magnetschicht würde nämlich beim Lesesignal während einer Umdrehung der Scheibe um 360° einen mehr oder weniger stark ausgeprägten sinusförmigen

Sp/P

Verlauf bewirken. Man spricht in diesem Fall von einer Modulation des elektrischen Signals, die als Abweichung vom Mittelwert gemessen wird. Eine Modulation von 10 % bedeutet, daß das Nutzsignal zwischen 90 und 110 % schwanken kann.

Beim Beschichtungsvorgang entsteht infolge der Scherung der magnetischen Eisenoxidpartikelchen im Auftragswerk in vielen Fällen eine unerwünschte magnetische Vorzugsrichtung in Längsrichtung des Bandes. Durch diese unerwünschte magnetische Ausrichtung kann die Modulation des Lesesignals bis zu 15 % betragen. Die durch Scherung der als Magnetdispersion bezeichneten Beschichtungsmasse erzeugten Richtfaktoren können im ungünstigsten Fall bis 1,20 betragen, wobei der Richtfaktor durch das Verhältnis der Maßzahl der Magnetisierung (Remanenz) in Längsrichtung des Aufzeichungsträgers zur Maßzahl der gleichen Meßgröße quer zur Längsrichtung bestimmt wird.

Die Scherung der Magnetdispersion ist nur eine - wenn auch die häufigste - Ursache für die Ausrichtung der Teilchen. Daneben gibt es auch eine Ausrichtung durch schwache Magnetfelder, die von Stahlteilen (Walzen, Rakelmesser usw.) der Beschichtungsstation herrühren können.

Eine Beseitigung der Ausrichtung kann nur vor dem Trocknen der Magnetschicht durchgeführt werden. Vorteilhaft ist es dabei, diese Entrichtung unmittelbar nach dem Schichtauftrag durchzuführen, weil hier die Viskosität der nassen Schicht am kleinsten und dadurch der Entrichtungseffekt am wirksamsten ist.

Es bestand nun die Aufgabe, diese magnetische Vorzugsrichtung zu eliminieren bzw. isotrope magnetische Verhältnisse in der Magnetschicht herzustellen.

Die Aufgabe wurde durch ein Verfahren gelöst, wie es in den Patentansprüchen gekennzeichnet ist.

Weitere Einzelheiten und Vorteile des erfindungsgemäßen Verfahrens ergeben sich aus der nachfolgenden Beschreibung eines Ausführungsbeispiels.

Die üblicherweise als Magnetdispersion bezeichneten Beschichtungsmassen bestehen vorwiegend aus magnetischem Pulver, auch Magnetpigment genannt, und Bindemittel in gleichmäßiger Verteilung. Eine Magnetschicht auf Basis von Magnetpigment ist ihrem Aufbau nach einem pigmentierten Lack vergleichbar. Zu ihrer Herstellung wird Magnetpigment in einer Bindemittellösung unter Verwendung von Zusatzstoffen feinst verteilt. Die Mischung wird sodann auf den Träger aufgebracht und getrocknet.

Als Bindemittel werden bekannterweise in erster Linie in organischen Lösungsmitteln lösliche, organische Polymere verwendet.

Dispergiermittel, wie anionische, kationische, amphotere und nichthomogene Netzmittel (z.B. Lecithin, Dodecylbenzolsulfonsäure, Fettsäuren und deren Salze) werden der Dispersion in Mengen bis zu ca. 3 % zugesetzt, um die Pigmentbenetzung und die Aufteilung der Magnetpigment-Agglomerate zu erleichtern und die Partikel in der flüssigen Phase in Schwebe zu halten.

Als Trägermaterial für flexible magnetische Informationsträger wird heute fast ausschließlich Polyethylen-therephthalat angewandt.

Je nach Anwendungszweck verwendet man Trägerbahnfolien mit Schichtstärken zwischen 4 und 200 µm.

Für Computerbänder werden Trägerbahnfolien zwischen 12 und 36 µm und für flexible Scheiben und Magnetkarten Folien über 75 µm verwendet.

Zur Herstellung der Magnetdispersion werden die Rohstoffe in Kugelmühlen oder Rührwerksmühlen unter Einwirkung hoher Scherkräfte, die durch Mahlkörper wie Kugeln aus Stahl, Glas oder Keramik übertragen werden, innig vermischt.

Die Beschichtungsvorrichtung zum Auftragen der Magnetdispersion auf die Trägerbahn besteht im wesentlichen aus einer Stützwalze für die Trägerbahn, einer Auftragsvorrichtung zum Aufbringen der Magnetdispersion, einer Trockenkammer und einer Aufwickelstation. Zum Aufbringen der Magnetdispersion in der gewünschten, äußerst konstanten Dicke - die Dickentoleranz der Magnetschicht beträgt für manche Produkte nur ± 0,2 µm - werden sehr präzise Messergießer oder Walzenauftragsverfahren angewandt. Diese Auftragsvorrichtungen sind der Fachwelt bekannt, so daß sie hier nicht näher beschrieben zu werden brauchen. Es können auch Mehrfachauftragsvorrichtungen zur Herstellung mehrerer Schichten vorgesehen werden. Ferner kann die Trägerbahn auch beidseitig beschichtet werden, indem zunächst die erste Schicht aufgetragen und getrocknet und danach eine zweite Schicht auf der Rückseite der Trägerbahn aufgebracht wird. Hierbei wird die Trägerbahn zweimal durch die Beschichtungsvorrichtung geführt.

Es gibt jedoch auch Verfahren, bei denen beide Schichten gleichzeitig oder kurze Zeit hintereinander auf die Trägerbahn aufgebracht werden. Hierbei ist es jedoch notwendig, die beidseitig nasse Trägerbahn mit Hilfe eines sog. Schwebetrockners zu trocknen, wobei die Trägerbahn

auf einem Luftpolster schwebend und berührungsfrei durch den Trockenkanal geführt wird.

Erfindungsgemäß wird nun die gerade auf die Trägerbahn aufgetragene, noch flüssige Schicht bzw. Schichten zum Entrichten der magnetischen Teilchen einem verwirbelnden Magnetfeld ausgesetzt, wie es beispielsweise ein rotierender Stabmagnet erzeugt. Die Drehachse durchdringt den Stabmagnet in der Mitte zwischen den beiden Polen senkrecht zu dessen Längsachse und ist ebenfalls senkrecht zur Trägerbahn gerichtet, so daß der Stabmagnet in einer zur Trägerbahn parallelen Ebene unter oder über dieser rotiert. Es kann auch sowohl unter als auch über der Trägerbahn jeweils ein Stabmagnet drehbar angeordnet sein. Die Länge des Stabmagnets ist etwa wie die Breite der Trägerbahn bemessen, wobei dessen Abstand von der Trägerbahn bzw. der Schichtoberfläche sich nach der dort erforderlichen magnetischen Feldstärke richtet. Sie sollte zwischen 10kA/m und 50 kA/m betragen. Die Geschwindigkeit, mit der die beschichtete Trägerbahn am mit 100 bis 1200 Umdrehungen pro Minute rotierenden Stabmagnet vorbeibewegt wird, liegt zweckmäßig zwischen 10 und 200 Meter pro Minute.

Nach einer bevorzugten Ausgestaltung des Verfahrens ist zwischen der beschichteten Trägerbahn und dem Stabmagnet ein Blech angeordnet, das eine der vom rotierenden Stabmagnet überstrichenen Fläche entsprechende Scheibenform besitzt. Für das Blech werden nichtferromagnetische Metalle, vorzugsweise Edelstahl, verwendet. Es hat sich gezeigt, daß durch diese Maßnahme der Verwirbelungseffekt gesteigert, und damit die angestrebte magnetische Isotropie noch weiter verbessert werden können. Der Abstand des Bleches vom Stabmagneten sollte nicht größer

als 3 mm sein, wobei das Blech von der fortbewegten Trägerbahn nicht berührt wird.

Eine noch vollkommenere Beseitigung der Ausrichtung der
magnetischen Teilchen kann erreicht werden, wenn auch
jenseits der beschichteten Trägerbahn ein solches Blech
angeordnet ist, d.h. wenn die Trägerbahn im Bereich des
oder der rotierenden Stabmagneten zwischen zwei zu dieser parallel angeordneten Blechen fortbewegt wird.

Es hat sich gezeigt, daß die magnetische Verwirbelung
auch eine Homogenisierung sowie ein Glätten der Magnetdispersionsschicht bewirkt, was sich vorteilhaft in den
magnetischen Eigenschaften der Schicht bemerkbar macht.

Nach dem Passieren des bzw. der rotierenden Stabmagnete
wird die Trägerbahn zum Trocknen und Härten der aufgetragenen Magnetschicht durch einen Trockenkanal mit Temperaturen zwischen 60$^\circ$ und 100$^\circ$C geführt. Danach erfolgt
die Verarbeitung der mit der Magnetschicht versehenen
Trägerbahn zu scheibenförmigen Aufzeichnungsträgern.

Ein nachstehend erläuterter Vergleichsversuch zeigt die
Wirksamkeit des erfindungsgemäßen Verfahrens, wobei zuerst eine Ausrichtung mit einem herkömmlichen Richtmagneten durchgeführt und unmittelbar danach gemäß dem
erfindungsgemäßen Verfahren eine Entrichtung vorgenommen
wurden. Nach dem Ausrichten und dem Entrichten ist jeweils der Richtfaktor der Magnetschicht bestimmt worden.

Beispiel

Polyesterfolienbahnen mit einer Stärke von 75 µm wurden
jeweils mit einer Magnetdispersion (M1-M4) mittels eines
Messergießers beschichtet und unmittelbar danach durch

das Magnetfeld eines Richtmagneten geführt. Die Breite der Trägerbahnen, die mit einer Geschwindigkeit von 10 m pro Minute fortbewegt wurden, betrug 150 mm. Nach dem Passieren des magnetischen Richtfeldes wurden - je nach rheologischen Eigenschaften der Dispersionen - unterschiedliche Richtfaktoren erzielt.

Im Abstand von 20 cm vom Richtmagnet befand sich ein rotierender Stabmagnet gemäß dem erfindungsgemäßen Verfahren zur Eliminierung der Ausrichtung.

Der rotierende Stabmagnet hatte eine Länge von 5 cm, eine Breite von 4 cm und eine Höhe von 1 cm. Die Drehzahl war auf 1100 Umdrehungen pro Minute eingestellt. Die magnetische Feldstärke betrug an der Trägerbahn 16 KA/m bei drehendem Stabmagnet. Zwischen dem Stabmagneten und der Magnetschicht befand sich ein rundes Blech aus Edelstahl mit einem Durchmesser von 16 cm. Die Dicke des Blechs betrug 1,5 mm.

Die Bestimmung der Richtfaktoren wurde jeweils an 3 Stellen der Trägerbahn (links, Mitte, rechts) vorgenommen, wobei bei der Ausrichtung der Richtfaktor im mittleren Bereich wegen der Geometrie des Richtmagneten am größten war.

Die Ergebnisse sind in nachfolgender Tabelle aufgeführt.

Tabelle

| | Richtfaktor mit Richtmagnet | | | Richtfaktor nach dem Entrichten | | |
|---|---|---|---|---|---|---|
| | rechts | Mitte | links | rechts | Mitte | links |
| M 1 | 1,27 | 1,21 | 1,10 | 1,02 | 1,02 | 1,02 |
| M 2 | 1,10 | 1,17 | 1,18 | 1,01 | 1,00 | 1,01 |
| M 3 | 1,09 | 1,20 | 1,06 | 1,00 | 1,00 | 1,01 |
| M 4 | 1,16 | 1,37 | 1,08 | 1,01 | 1,02 | 1,02 |

Patentansprüche

1. Verfahren zur Herstellung der magnetischen Aufzeichnungsschicht für scheibenförmige Aufzeichnungsträger, bei dem auf eine Trägerfolienbahn ein- oder beidseitig eine oder mehrere Beschichtungsmassen aufgetragen werden, welche in einem sich verfestigenden Bindemittelsystem magnetisch anisotrope Teilchen enthalten, und die Beschichtungsmassen durch Trocknen und ggf. Härten in eine feste Magnetschicht überführt werden, dadurch gekennzeichnet, daß man nach dem Aufbringen der Beschichtungsmassen zum Entrichten der magnetischen Teilchen und zum Erzeugen einer Isotropie auf die noch flüssige Schicht ein magnetisches Feld einwirken läßt, das von mindestens einem in einer zur Trägerbahn parallelen Ebene rotierenden Stabmagnet erzeugt wird, wobei die Trägerbahn fortbewegt wird.

2. Verfahren nach Anspruch 1, dadurch gekennzeichnet, daß zwischen der beschichteten Trägerfolienbahn und dem rotierenden Stabmagnet ein Blech angeordnet wird.

3. Verfahren nach Anspruch 1 und 2, dadurch gekennzeichnet, daß der Stabmagnet über der aufgetragenen Schicht rotiert.

4. Verfahren nach Anspruch 1 bis 3, dadurch gekennzeichnet, daß die beschichtete Trägerfolienbahn im Bereich des rotierenden Stabmagneten zwischen zwei zu dieser parallel angeordneten Blechen fortbewegt wird.

5. Verfahren nach Ansprüchen 1 bis 4, <u>dadurch gekenn-</u><u>zeichnet</u>, daß der Stabmagnet mit einer Drehzahl zwischen 100 und 1200 Umdrehungen pro Minute rotiert.

6. Verfahren nach Ansprüchen 1 bis 5, <u>dadurch gekenn-</u><u>zeichnet</u>, daß die beschichtete Trägerfolienbahn gegenüber dem Stabmagneten mit einer Geschwindigkeit von 10 bis 200 Metern pro Minute fortbewegt wird.